# EUROPÄISCHE PATENTSCHRIFT

(11) **EP 0 347 797 B1**
(45) Veröffentlichungstag und Bekanntmachung des Hinweises auf die Patenterteilung: **22.12.1993**
(21) Anmeldenummer: 89111091.8
(22) Anmeldetag: 19.06.1989
(51) Int. Cl.: B01D 53/34, F23C 9/00

(54) **Verfahren zum Reduzieren von NOx in Rauchgasen von Heizkesseln und Heizkessel mit Mitteln zum Reduzieren des NOx-Anteils in den Rauchgasen**
Process for reducing NOx in exhaust gases from furnaces, and furnace with means for reducing the NOx content in exhaust gases
Procédé de réduction de NOx dans les gaz d'échappement des chaudières et chaudière pourvue de moyens pour réduire le taux de NOx dans les gaz d'échappement

(30) Priorität: 24.06.1988 CH 2438/88
(43) Veröffentlichungstag der Anmeldung: 27.12.1989
(73) Patentinhaber: YGNIS HOLDING AG, CH-1700 Fribourg (CH)
(72) Erfinder: Götte, Albert, CH-6020 Emmenbrücke (CH)
(74) Vertreter: Troesch, Hans Alfred

(56) Entgegenhaltungen:
- DE-A- 3 533 272
- DE-A- 3 701 364
- US-A- 3 741 166

## Beschreibung

Die vorliegende Erfindung betrifft ein Verfahren zum Reduzieren von NOₓ in Rauchgasen von Heizkesseln sowie einen Heizkessel mit Mitteln zum Reduzieren des NOₓ-Anteils in den Rauchgasen.

Im Zuge des bewusster werdenden Umweltschutzes wurde u.a. der zulässige Stickoxid-Ausstoss in Luftreinhalteverordnungen festgelegt. Bei der Verbrennung von fossilen Brennstoffen entstehen nämlich u.a. auch Stickoxide, welche die Umwelt belasten. Es handelt sich dabei mehrheitlich um Stickstoffmonoxid und in kleinen Mengen auch um Stickstoffdioxid. Derartige Stickoxide entstehen durch die Oxidation von in der Verbrennungsluft vorhandenen Stickstoff bei Temperaturen von über 1'200°C. Dabei spielt natürlich die in dieser Atmosphäre vorhandene Sauerstoffkonzentration eine entscheidende Rolle.

In der Praxis haben sich insbesondere zwei verschiedene Verfahren herausgebildet, um die Stickoxid-Emissionen zu verringern. Im einen Fall wird die Stickoxidbildung schon während des Verbrennungsvorganges zu eliminieren versucht, während bei der zweiten Art eine Nachbehandlungsmethode der stickstoff/oxidhaltigen Rauchgase, wie dies grundsätzlich bei Katalysator-Fahrzeugen bekannt ist, vorzunehmen ist.

Eine Stickoxidverminderung bei Öl- und Gasfeuerungen, wie diese insbesondere in Heizkesseln zur Anwendung kommen, versucht man mit Hilfe einer Rückführung von Abgasen zum Brenner zu erzielen, indem nicht nur die Verbrennungstemperatur gesenkt wird, sondern auch der Partialdruck des Sauerstoffes reduziert.

Bei der Rückführung von Rauchgasen handelt es sich um Grössenordnungen von 15 bis 20% der Vollastrauchgasmengen, wobei sich die NOₓ-Werte bis zu ungefähr 70% verringern lassen.

Im Zusammenhang mit der vorliegenden Erfindung wird auf die CH-A- 628 134 verwiesen, in welcher ein rauchgasdurchströmter Wärmetauscher beschrieben ist, dessen Rauchrohre als Doppelrohre, zumindest am hinteren Rauchrohrende ausgebildet sind. Dadurch tritt bei jeder praktisch vorbestimmten, rauchgasseitigen Belastung weder an der Rauchrohr- noch an der Innenrohr-Innenwand Wasserdampfkondensation auf. Diese Massnahme ist insbesondere bei schwefelhaltigen Brennstoffen von ausschlaggebender Bedeutung im Sinne eines Korrosionsschutzes.

Im weiteren wird in diesem Zusammenhang auf die CH-A- 644 440 verwiesen, die einen Wasser- oder Dampfkessel mit hinten geschlossenem Feuerraum offenbart. Bei diesem Kessel ist die Kombination eines Rotationszerstäubers eines an der Kesseltür angebauten Brenners mit einem nachgeschalteten, in den Feuerraum vorstehenden Flammenführungseinsatz vorgesehen, welcher mindestens teilweise aus feuerfestem Material besteht und vorzugsweise wassergekühlt ist.

Die DE-A-35 33 272 wiederum beschreibt eine Verbrennungsanlage mit einer Abgasrückführung, wo zur Verminderung der Stickoxidbildung gekühlte Abgase der Verbrennungsluft zugemischt werden. Eine analoge Anordnung beschreibt die US-A-3 741 166, wo ebenfalls Rauchgase gekühlt und zur Verbrennungsluft zugeführt werden, um so einerseits den Sauerstoffgehalt in der Verbrennungsluft zu mindern und anderseits, um die Temperatur dieser Verbrennungsluft möglichst tief zu halten.

In der DE-A-37 01 364, schlussendlich, wird ein Flammrohrkessel für die Befeuerung mit Brenngas oder Heizöl offenbart, wo zusätzlich zur teilweisen Rückführung von gekühlten Rauchgasen im Flammrohr vor dem Brenner ein Wasserrohrbündel angeordnet ist, das von den Flammengasen beaufschlagt ist.

Die vorliegende Erfindung bezweckt im dargelegten Sinne mit einfachen Mitteln die aus dem Heizkessel abziehenden Rauchgase NOₓ-ärmer zu gestalten.

Dies wird durch die Merkmale des Anspruchs 1 erreicht.

Die Erfindung wird anschliessend beispielsweise anhand von zwei Zeichnungen erläutert.

Es zeigt in rein schematischer Darstellung:
- Fig. 1: einen Längsschnitt durch einen Heizkessel, und
- Fig. 2: eine Variante eines Heizkessels analog Fig. 1.

Ein Heizkessel 21 weist vorn eine Tür 22 auf und hinten einen rohrförmigen Rauchgasabgang 23, die der Brennkammer 26 nachgeschaltet ist. Dem Austritt aus dem Brennerrohr des Brenners 25 folgt ein Brennerrohreinsatz 27. Innerhalb der Kesselisolierung (nicht dargestellt) befindet sich der Kesselmantel 29, welcher aussen einen Wassermantel 30 begrenzt. Aus der Brennkammer 26 führt ein Flammengas-Rückführraum 45 zylindrischer oder kegeliger Form in einen Rauchgasteiler 48, welcher von den Rauchgasen durchströmt wird. Ein Teil der Rauchgase strömt durch einen Ringspalt 46 und vermischt sich mit den Flammengasen, welcher merklich abkühlt und damit deren NOₓ-Gehalt senkt. Der Rest der Rauchgase strömt durch Rauchgasrohre 47 in eine Rauchgaskammer 32. Ein Teil der Rauchgase strömt durch den Rauchgasabgang 23 in den Kamin, der Rest wird zurückgeführt. Zu diesem Zweck führt aus der Rauchgaskammer 32 ein Rauchgasrückführrohr 34 - es können auch mehrere sein - welches, wie ersichtlich, in den Ansaugstutzen eines Gebläses 40 und von dort in den Brenner 25 mündet. Aus dem Wassermantel 30 leitet ein Wasservorlaufstutzen 36 das Heisswasser zum Verbraucher und von diesem zurück zu einem Wasserrücklaufstutzen 37. Wie ersichtlich, ist der Brennerrohreinsatz 27 von Wasser des Wassermantels 30 gekühlt. Der Einsatz 27 wird über ein Zuspeiserohr 42 versorgt, während ein Rückführrohr 43 das Wasser in den Wassermantel 30 zurückleitet.

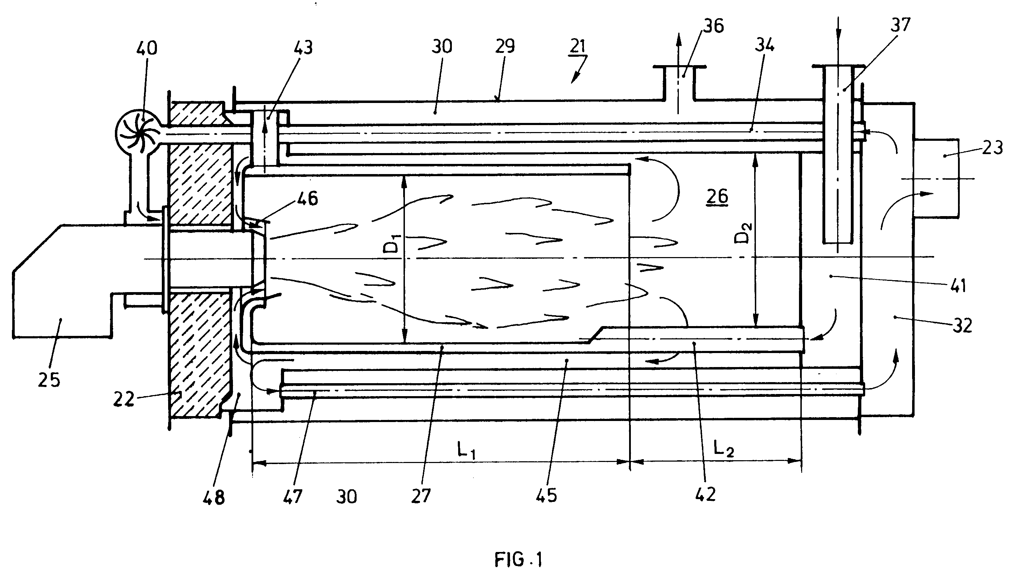

Das Rauchgasrückführrohr 34 mündet beim dargestellten Beispiel in den Raum der Verbrennungsluft nach dem Verbrennungsluftventilator zum Brenner 25. Eine Regelklappe (nicht dargestellt), erlaubt den Querschnitt des Rauchgasrückführrohres 34 und damit die zurückgeführte Rauchgasmenge zu verändern. Wie ersichtlich, verläuft der Raum 45 in Längsrichtung des Heizkessels von hinten nach vorne. Er ist innen und aussen von Wasser umspült und damit werden die durchströmenden Rauchgase in gewolltem Masse gekühlt. Auf diese Weise ist es möglich, den NOₓ-Gehalt der Rauchgase im dargelegten Rahmen zu vermindern. Bei diesem Heizkessel gemäss Fig. 1 stellt der Rauchgasrückführraum 45 den zweiten Kesselzug dar, während die Rauchgasrohre 47 den dritten Zug bilden. Es ist ersichtlich, dass alle Rauchgase auf diese Weise wassergekühlt sind, so dass sie beim Rückfahren in den Brenner 25 oder die Brennkammer 26 bzw. den Brennerrohreinsatz 27 abgekühlt sind und damit sicherstellen, dass die Temperaturen im Brennerrohreinsatz 27 und der Brennkammer 26 auf niedriger Temperatur gehalten werden, was eine entsprechend geringere Menge von NOₓ in den Rauchgasen ergibt. Dies gestattet, die heute sehr scharfen Vorschriften bezüglich Rauchgaszusammensetzung zu erfüllen.

Um die entsprechenden Rückströmungen der Rauchgase zu erwirken, ist nicht nur im dargestellten Beispiel ein Rauchgasgebläse 40 vorgesehen, sondern auch Leitbleche, welche die Ejektorwirkung des Strahles aus dem Brenner 25, wie ersichtlich, durch Erzeugung eines entsprechenden Unterdruckes im Ringspalt 46 sicherstellen. Dieser bewirkt das Ansaugen der Rauchgase.

Um den Kühlungseffekt an den Flamm- bzw. Rauchgasen zu verbessern, werden diese durch Einbauten in ihren Durchströmkanälen mit einer zusätzlichen Wirbelung versehen, was entsprechende Erhöhung der Wärmeübergangszahlen auf der gasseitigen Austauschfläche bewirkt. Dadurch kann die Rauchgastemperatur auf die gewünschten Werte gesenkt werden.

Es ist ferner möglich, den Brennerrohreinsatz 27 auf seiner der Flamme zugekehrten Fläche durch Formgebung oder Anbringen von Rippen, Noppen u. dgl. flächenmässig zu vergrössern und damit die Kühlung durch das Kühlwasser im Brennerrohreinsatz 27 zu verbessern. Auch dies hilft, den NOₓ-Gehalt zu reduzieren.

Versuche haben gezeigt, dass die Länge L₁ des Brennerrohreinsatzes 27 vorzugsweise doppelt so gross und grösser als der zugehörige Durchmesser D₁ zu wählen ist, während die verbleibende Länge der Brennkammer 26, L₂, ungefähr 0,6 bis 0,8 mal dem Durchmesser D₁ sein kann.

Der hintere Teil der Brennkammer 26 weist einen Durchmesser D₂ auf, welcher mindestens 1,3 mal den Wert des Durchmessers D₁ aufweist, um ein müheloses Rückströmen der Flammgase in den Brennerrohreinsatz 27 zu bewirken.

Die Wasserkammer 41 dient dem Absetzen eingespülten Schlammes, welcher von Zeit zu Zeit durch eine entsprechende Öffnung entfernt werden kann. Es ist klar ersichtlich, dass das Wasser im Kessel, dem Wasservorlaufsstutzen 36 entnommen und dem Wasserrücklaufstutzen 37 zugeführt, eine Zwangszirkulation ausführt, womit die Kühlung der Flamm- und Rauchgase im vorgesehenen Rahmen jederzeit sichergestellt ist.

Zur Reduzierung des NOₓ-Gehaltes trägt mithin auch der wassergekühlte Brennerrohreinsatz 27 wesentlich bei. Durch die zusätzliche Rezirkulation von heissen Angasen wird der O₂-Partialdruck wesentlich beeinflusst.

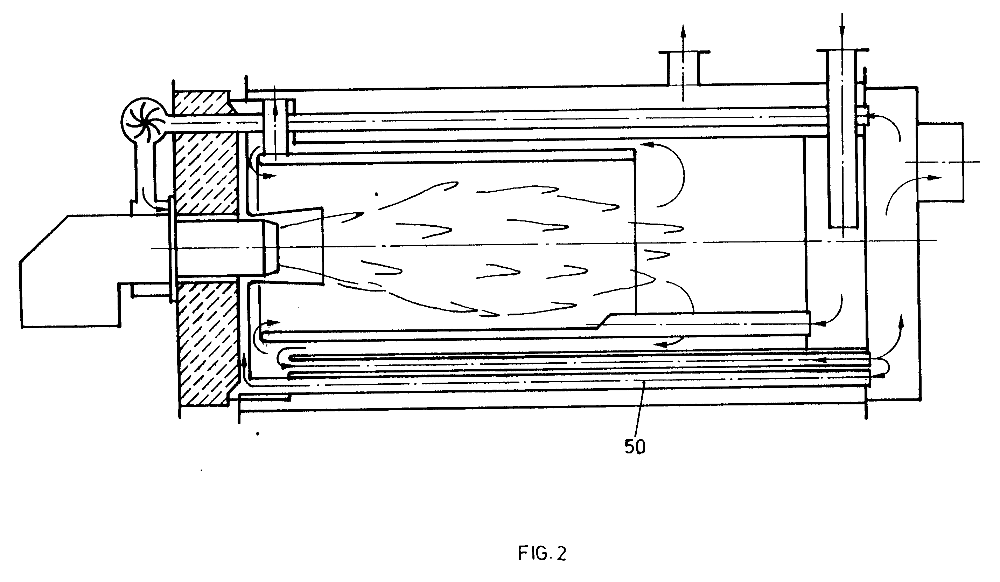

Die Ausführung gemäss Fig. 2 ist analog derjenigen gemäss Fig. 1, wobei im wesentlichen die Rückführung gekühlter Rauchgase in den Flammenkern mit Hilfe eines zusätzlichen Venturirohres vorgesehen wird, während durch weitere Rauchgasrohre 50 in Form eines vierten Zuges ein Teil der in die Rauchgaskammer 32 rückgeführten Rauchgase wiederum, wie ersichtlich, zur Kühlung der Flammgase in den Bereich der Brennermündung rückgeführt wird.

## Patentansprüche

1. Heizkessel für die Befeuerung mittels eines Brenners mit einer im Heizkessel (21) angeordneten, zwangsweise wassergekühlten Brennkammer, einem Brenner (25) sowie einem in der Brennkammer angeordneten Brennerrohreinsatz mit Wassermantel, wobei der Brennerrohreinsatz (27) an dessen Aussenwand von teilweise zum Rückführen bestimmten Rauchgasen zwangsumströmt ist dadurch gekennzeichnet, dass eine Rückführung (45, 46) für Rauchgase in den Flammenbereich vorgesehen ist und dass der wassergekühlte Brennerrohreinsatz (27) an dessen Innenwand von der Flamme bzw. von Verbrennungsgasen zwangsumströmt ist, wobei der Brennerrohreinsatz (27) mit Wasser in Gegenrichtung zur Flamme zwangsdurchströmt ist.

2. Heizkessel nach Anspruch 1, dadurch gekennzeichnet, dass sich der Brennerrohreinsatz wenigstens über einen Teil der Länge der Brennkammer erstreckt.

3. Heizkessel nach einem der Ansprüche 1 oder 2, dadurch gekennzeichnet, dass der Brennerrohreinsatz (27) zylindrisch und/oder konisch ausgebildet ist und dass seine Länge (L₁ ) vorzugsweise mindestens doppelt so gross ist wie sein Durchmesser (D₁).

4. Heizkessel nach einem der Ansprüche 1 bis 3, dadurch gekennzeichnet, dass der Brennerrohreinsatz (27) auf seiner Einströmseite düsenförmig (46), gegebenenfalls im Querschnitt veränderbar, ausgebildet ist, indem z.B. Leitbleche (49) angeordnet sind.

5. Heizkessel nach einem der Ansprüche 1 bis 4, dadurch gekennzeichnet, dass die Gesamtlänge der Brennkammer (26), vermindert um die Länge (L₁) des Brennerrohreinsatzes (27) ungefähr 0,6 D₁ - 0,8 D₁ ist und der Brennkammerdurchmesser (D₂) z.B. 1,3 D₁ beträgt.

6. Heizkessel nach einem der Ansprüche 1 bis 5, dadurch gekennzeichnet, dass gas- und/oder wasserseitig wirbelerzeugende Mittel angeordnet sind, z.B. Wirbler, Rippen, Noppen.

## Claims

1. A boiler for heating by means of a burner comprising an automatically water-cooled combustion chamber disposed in the boiler (21), a burner (25), and a burner-pipe insert and water jacket disposed in the combustion chamber, the outer wall of the burner-pipe insert (27) being automatically flowed around by flue gases, partly for the purpose of recycling, characterised in that return guide means (45, 46) for flue gases are provided in the flame region and the inner wall of the water-cooled burner-pipe insert (27) is automatically flowed round by the flame or by combustion gases, the burner-pipe insert (27) being automatically flowed round by water in the opposite direction to the flame.

2. A boiler according to claim 1, characterised in that the burner-pipe insert extends over at least a part of the length of the combustion chamber.

3. A boiler according to claim 1 or 2, characterised in that the burner-pipe insert (27) is cylindrical and/or conical and its length (L₁) is preferably at least twice as great as its diameter (D₁).

4. A boiler according to any of claims 1 to 3, characterised in that the inflow end of the burner-pipe insert (27) is nozzle-shaped (46), and optionally variable in cross-section, e.g. by providing baffle plates (49).

5. A boiler according to any of claims 1 to 4, characterised in that the total length of the combustion chamber (26), minus the length (L₁) of the burner-pipe insert (27), is approximately 0.6 D₁ - 0.8 D₁, and the diameter (D₂) of the combustion chamber is e.g. 1.3 D₁.

6. A boiler according to any of claims 1 to 5, characterised in that turbulence-producing means such as centrifugal separators, ribs or knobs are disposed on the gas side and/or the water side.

## Revendications

1. Chaudière pour le chauffage à l'aide d'un brûleur, comportant une chambre de combustion disposée dans la chaudière (21) et soumise à un refroidissement par eau forcé, un brûleur (25) et un élément tubulaire de brûleur disposé dans la chambre de combustion et pourvu d'une chambre à eau, étant précisé que l'élément tubulaire de brûleur (27) est obligatoirement entouré, au niveau de sa paroi extérieure, de gaz d'échappement destinés en partie à être recyclés, caractérisée en ce qu'il est prévu un recyclage (45, 46) pour les gaz d'échappement dans la zone de la flamme, et en ce que l'élément tubulaire de brûleur (27) refroidi par eau est obligatoirement entouré, au niveau de sa paroi intérieure, par la flamme et par des gaz de combustion, cet élément tubulaire (27) présentant un passage d'eau forcé dans le sens inverse de celui de la flamme.

2. Chaudière selon la revendication 1, caractérisée en ce que l'élément tubulaire de brûleur s'étend sur une partie au moins de la longueur de la chambre de combustion.

3. Chaudière selon l'une des revendications 1 ou 2, caractérisée en ce que l'élément tubulaire de brûleur (27) a une forme cylindrique et/ou conique, et en ce que sa longueur (L₁) est de préférence au moins deux fois plus grande que son diamètre (D₁).

4. Chaudière selon l'une des revendications 1 à 3, caractérisée en ce que l'élément tubulaire de brûleur (27) présente, côté admission, la forme d'une buse (46) à section transversale éventuellement variable, des tôles de guidage (49) étant prévues, par exemple.

5. Chaudière selon l'une quelconque des revendications 1 à 4, caractérisée en ce que la longueur totale de la chambre de combustion (26), réduite de la longueur (L₁) de l'élément tubulaire de brûleur (27), est d'environ 0,6 D₁ à 0,8 D₁ et le diamètre (D₂) de la chambre de combustion est par exemple de 1,3 D₁.

6. Chaudière selon l'une des revendications 1 à 5, caractérisée en ce qu'il est prévu des moyens générateurs de tourbillons, côté gaz et/ou côté eau, par exemple des cyclones, des nervures ou des bosses.
